(19) Europäisches Patentamt
European Patent Office
Office européen des brevets

(11) **EP 4 588 986 A1**

(12) **EUROPEAN PATENT APPLICATION**
published in accordance with Art. 153(4) EPC

(43) Date of publication:
**23.07.2025  Bulletin 2025/30**

(21) Application number: 23865536.9

(22) Date of filing: **12.09.2023**

(51) International Patent Classification (IPC):
*C09J 7/29* (2018.01)     *C09J 7/38* (2018.01)
*C09J 11/04* (2006.01)     *C09J 133/04* (2006.01)
*C09J 201/00* (2006.01)     *C23F 11/00* (2006.01)
*C23F 13/02* (2006.01)     *C23F 13/10* (2006.01)
*C23F 13/18* (2006.01)

(52) Cooperative Patent Classification (CPC):
**C09J 7/29; C09J 7/38; C09J 11/04; C09J 133/04;
C09J 201/00; C23F 11/00; C23F 13/02;
C23F 13/10; C23F 13/18**

(86) International application number:
**PCT/JP2023/033255**

(87) International publication number:
**WO 2024/058185 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  13.09.2022  JP 2022145496

(71) Applicant: SEKISUI CHEMICAL CO., LTD.
**Osaka-shi
Osaka
530-8565 (JP)**

(72) Inventors:
• **MIYAMOTO, Shunichi**
  **Hasuda-shi, Saitama 349-0198 (JP)**
• **KAJI, Shouji**
  **Hasuda-shi, Saitama 349-0198 (JP)**
• **SAKON, Takaaki**
  **Hasuda-shi, Saitama 349-0198 (JP)**

(74) Representative: **Ter Meer Steinmeister & Partner
Patentanwälte mbB
Nymphenburger Straße 4
80335 München (DE)**

(54) **PRESSURE-SENSITIVE ADHESIVE TAPE FOR CORROSION PREVENTION, STRUCTURE,
AND CORROSION PREVENTION METHOD**

(57)     An anticorrosive pressure-sensitive adhesive tape of the present invention includes a base material and a pressure-sensitive adhesive layer provided on at least one side of the base material, in which the base material has a difference between tensile loads at 2.5% elongation and at 0.5% elongation of 1.5 N/mm or more and 6.0 N/mm or less, and has a tear strength of 1.7 N or more as measured by an Elmendorff tear method in accordance with JIS K7128-2 (1998) without forming a slit. A structure of the present invention includes the anticorrosive pressure-sensitive adhesive tape of the present invention, and an adherend including a metal material or an adherend including concrete, in which the anticorrosive pressure-sensitive adhesive sheet of the present invention is attached to a surface of the adher-end. A corrosion prevention method of the present invention includes a first process of providing the anticorrosive pressure-sensitive adhesive tape of the present invention, and a second process of attaching the anticorrosive pressure-sensitive adhesive tape to an adherend and then peeling the surface protection film from the anticorrosive pressure-sensitive adhesive tape. The present invention can provide: an anticorrosive pressure-sensitive adhesive tape that exhibits excellent adhesion to an adherend having a complex surface shape and can suppress occurrence of wrinkles, lifting, and a tear during application to a large area; a structure including the anticorrosive pressure-sensitive adhesive tape; and a corrosion prevention method using the anticorrosive pressure-sensitive adhesive tape.

EP 4 588 986 A1

Fig. 1

**Description**

Technical Field

The present invention relates to an anticorrosive pressure-sensitive adhesive tape, a structure including the anticorrosive pressure-sensitive adhesive tape, and a corrosion prevention method using the anticorrosive pressure-sensitive adhesive tape.

Background Art

Anticorrosive coating materials containing a large amount of zinc are widely used in order to prevent corrosion of iron or an alloy including iron, such as steel. It is known that zinc is a metal having a lower potential than that of iron and that zinc thus exhibits the effect of sacrificial protection and has a high anticorrosive property. In addition, anticorrosive paints are widely used also in concrete structures in order to prevent deterioration of concrete due to corrosion caused by salt damage, neutralization caused by exhaust gas and the like, alkali aggregate reaction, freezing of moisture intruding into cracks, or the like, which lead to corrosion of internal rebar. However, anticorrosion by a coating material needs a drying process after application, for example, and thus takes time for working, which decreases working efficiency when local repair is carried out in, for example, the use for civil engineering and construction, including bridges. In addition, unevenness in working is likely to occur in anticorrosion by a coating material.

Under the above-described circumstances, approaches in relation to an anticorrosive pressure-sensitive adhesive tape providing enhanced workability by imparting sacrificial protectability or the like to a tape have been carried out. For example, in PTL1, zinc particles and a conductive filler are contained in a pressure-sensitive adhesive layer, and an electronic circuit is formed between a zinc plate as a base material and oxygen and water, thereby achieving sacrificial protectability.

Citation List

Patent Literature

PTL1: JP 2019-127606 A

Summary of Invention

Technical Problem

However, the anticorrosive member of PTL1 cannot sufficiently adhere to an adherend having a complex surface shape such as a convex and concave part, and the anticorrosive property of the anticorrosive member has not been exerted sufficiently in some cases. In addition, wrinkles, lifting, or a tear may occur during application to a large area in the anticorrosive member of PTL1.

Therefore, a problem to be solved by the present invention is to provide: an anticorrosive pressure-sensitive adhesive tape that exhibits excellent adhesion to an adherend having a complex surface shape and can suppress occurrence of wrinkles, lifting, and a tear during application to a large area; a structure including the anticorrosive pressure-sensitive adhesive tape, and a corrosion prevention method using the anticorrosive pressure-sensitive adhesive tape.

Solution to Problem

The present inventors have earnestly studied and consequently found that the above problem can be solved by using a base material having a difference between the tensile loads at 2.5% elongation and at 0.5% elongation of a predetermined value or less and having a tear strength of a predetermined value or more, thus having completed the present invention.

The present invention provides [1] to [19] as follows.

[1] An anticorrosive pressure-sensitive adhesive tape comprising a base material and a pressure-sensitive adhesive layer provided on at least one side of the base material, wherein the base material has a difference between a tensile load at 2.5% elongation and a tensile load at 0.5% elongation of 1.5 N/mm or more and 6.0 N/mm or less, and has a tear strength of 1.7 N or more as measured by an Elmendorff tear method in accordance with JIS K7128-2 (1998) without forming a slit.

[2] The anticorrosive pressure-sensitive adhesive tape according to [1], wherein the anticorrosive pressure-sensitive adhesive tape suffers no formation of rust in a cyclic corrosion test in accordance with Cycle D in JIS K5600-7-9, and has an adhesive force after the cyclic corrosion test of 20 N/25 mm or more.

[3] The anticorrosive pressure-sensitive adhesive tape according to [1] or [2], wherein the base material has a gloss retention of 80% or more after an accelerated weather resistance test in accordance with Cycle A in JIS K5600-7-7 is conducted for 500 hours.

[4] The anticorrosive pressure-sensitive adhesive tape according to any one of [1] to [3], wherein the base material has a thickness of 20 to 150 $\mu$m.

[5] The anticorrosive pressure-sensitive adhesive tape according to any one of [1] to [4], wherein the base material is a resin film having a coating film on a surface thereof.

[6] The anticorrosive pressure-sensitive adhesive tape according to [5], wherein the resin film is at least one resin film selected from the group consisting of a polyethylene telephthalate (PET) film, an oriented polypropylene (OPP) film, an acrylic resin film, and a polyamide resin film.

[7] The anticorrosive pressure-sensitive adhesive tape according to any one of [1] to [6], wherein the pressure-sensitive adhesive layer contains a metal having a lower potential than that of iron.

[8] The anticorrosive pressure-sensitive adhesive tape according to [7], wherein the metal having a lower potential than that of iron is zinc.

[9] The anticorrosive pressure-sensitive adhesive tape according to [7] or [8], wherein the pressure-sensitive adhesive layer contains an electroconductive material other than the metal having a lower potential than that of iron.

[10] The anticorrosive pressure-sensitive adhesive tape according to [9], wherein the electroconductive material is a carbon nanotube.

[11] The anticorrosive pressure-sensitive adhesive tape according to any one of [1] to [10], wherein the pressure-sensitive adhesive layer is made with a pressure-sensitive acrylic adhesive.

[12] The anticorrosive pressure-sensitive adhesive tape according to any one of [1] to [11], comprising a metal layer between the base material and the pressure-sensitive adhesive layer, the metal layer being a layer of a metal having a lower potential than that of iron.

[13] The anticorrosive pressure-sensitive adhesive tape according to [12], wherein the metal layer is a layer of zinc.

[14] The anticorrosive pressure-sensitive adhesive tape according to any one of [1] to [13], wherein the pressure-sensitive adhesive layer has a thickness of 50 to 3000 $\mu$m.

[15] The anticorrosive pressure-sensitive adhesive tape according to any one of [1] to [14], wherein the pressure-sensitive adhesive layer has a storage elastic modulus at 23°C of 50,000 to 1,000,000 Pa.

[16] The anticorrosive pressure-sensitive adhesive tape according to any one of [1] to [15], wherein the pressure-sensitive adhesive layer is provided on one side of the base material, and the anticorrosive pressure-sensitive adhesive tape further comprises a surface protection film provided on a surface on a side of the base material opposite to the pressure-sensitive adhesive layer side for protecting the surface on the side of the base material opposite to the pressure-sensitive adhesive layer side.

[17] A structure comprising: the anticorrosive pressure-sensitive adhesive tape according to any one of [1] to [16]; and an adherend including a metal material or an adherend including concrete, wherein the anticorrosive pressure-sensitive adhesive sheet is attached to a surface of the adherend.

[18] The structure according to [17], wherein an attachment area of the anticorrosive pressure-sensitive adhesive tape is 2000 cm$^2$ or more.

[19] A corrosion prevention method comprising: a first process of providing the anticorrosive pressure-sensitive adhesive tape according to [16]; and a second process of attaching the anticorrosive pressure-sensitive adhesive tape to an adherend and then peeling the surface protection film from the anticorrosive pressure-sensitive adhesive tape.

Advantageous Effects of Invention

The present invention can provide: an anticorrosive pressure-sensitive adhesive tape that exhibits excellent adhesion to an adherend having a complex surface shape and can suppress occurrence of wrinkles, lifting, and a tear during application to a large area; a structure including the anticorrosive pressure-sensitive adhesive tape; and a corrosion prevention method using the anticorrosive pressure-sensitive adhesive tape.

Brief Description of Drawings

[Fig. 1] Fig. 1 is a schematic view illustrating a usage example of a modification of an anticorrosive pressure-sensitive adhesive tape of one embodiment of the present invention.

[Fig. 2] Fig. 2 is a schematic cross-sectional view illustrating another embodiment of the anticorrosive pressure-sensitive adhesive tape of the present invention.

[Fig. 3] Fig. 3 is a schematic view illustrating a method for evaluating the projection conformability of the anticorrosive pressure-sensitive adhesive tape of the present invention.

[Fig. 4] Fig. 4 is a view for explaining evaluation on large area applicability.

Description of Embodiments

[Anticorrosive pressure-sensitive adhesive tape]

The present invention is an anticorrosive pressure-sensitive adhesive tape comprising a base material and a pressure-sensitive adhesive layer provided on at least one side of the base material. The base material has a difference between a tensile load at 2.5% elongation and a tensile load at 0.5% elongation of 1.5 N/mm or more and 6.0 N/mm or less, and has a tear strength of 1.7 N or more as measured by an Elmendorff tear method in accordance with JIS K7128-2 (1998) without forming a slit.

<Base material>

(Difference between tensile loads)

The base material of the anticorrosive pressure-sensitive adhesive tape of the present invention has a difference between the tensile load at 2.5% elongation and the tensile load at 0.5% elongation (hereinafter, simply referred to as the "difference between tensile loads") of 1.5 N/mm or more and 6.0 N/mm or less. The difference between tensile loads means the tensile load per 2% elongation substantially in the elastic region.

When the difference between tensile loads is less than 1.5 N/mm, wrinkles may occur on the anticorrosive pressure-sensitive adhesive tape during application to a large area. From such a point of view, the difference between tensile loads is preferably 2.0 N/mm or more, more preferably 2.5 N/mm or more, and still more preferably 3.0 N/mm or more.

In addition, when the difference between tensile loads exceeds 6.0 N/mm, lifting may occur when the anticorrosive pressure-sensitive adhesive tape is adhered to an adherend having a complex surface shape, and lifting or a tear may occur during application to a large area. From such a point of view, the difference between tensile loads is preferably 5.5 N/mm or less, more preferably 5.0 N/mm or less, and still more preferably 4.5 N/mm or less.

The difference between tensile loads is to be measured each in the MD and the TD of the base material, and the larger of the values is to be employed. When it is not known whether the direction is the MD or the TD, the largest value of the differences between tensile loads may be employed. The difference between tensile loads can be measured by the method described in the example.

In addition, the difference between tensile loads of the base material can be adjusted to fall within the above-described ranges by appropriately selecting the materials to be used in the base material, the thickness of the base material, and the like. Specifically, the material to be used in the base material is preferably a resin film, and a polyethylene terephthalate (PET) film and an oriented polypropylene (OPP) film are preferable, in particular. The thickness of the base material preferably falls within the range described later.

(Tear strength)

The base material for use in the anticorrosive pressure-sensitive adhesive tape of the present invention has a tear strength of 1.7 N or more as measured by an Elmendorff tear method in accordance with JIS K7128-2 (1998) without forming a slit. When the tear strength of the base material measured without forming a slit is less than 1.7 N, in an attempt of adhering the anticorrosive pressure-sensitive adhesive tape to an adherend having a complex surface shape, lifting or a tear may occur in the anticorrosive pressure-sensitive adhesive tape. In addition, lifting or a tear may occur in the anticorrosive pressure-sensitive adhesive tape during application to a large area. From such a point of view, the tear strength of the base material measured without forming a slit is preferably 3.0 N or more, more preferably 6.0 N or more, and still more preferably 12 N or more.

The tear strength of the base material measured without forming a slit is preferably as high as possible, and the upper limit of the range thereof is 16 N, for example.

The tear strength of the base material measured without forming a slit is to be measured each in the MD and the TD of the base material, and the smaller of the values is to be employed. When it is not known whether the direction is the MD or the TD, the smallest value of the tear strength may be employed. The tear strength of the base material measured without forming a slit can be measured by the same method as the Elmendorff tear method in accordance with JIS K7128-2 (1998) except that measurement is conducted without forming a slit.

The tear strength of the base material measured without forming a slit can be adjusted to fall within the above-described ranges by appropriately selecting the materials to be used in the base material, the thickness of the base material, and the like. Specifically, the material used in the base material is preferably a resin film, a PET film and an OPP film are preferable, in particular, and a biaxially oriented PET film and a biaxially oriented OPP film are more preferable. The thickness of the base material preferably falls within the range described later.

(Materials to be used in base material)

Examples of the base material to be used in the present invention include sheet-like materials such as a resin film and non-woven fabric.

Examples of the resin film include polyolefinic resin films such as a polypropylene resin film, a polyethylene resin film, and an ethylene/vinyl acetate copolymer (EVA) resin film, a polyester resin film, a polyamide resin film (nylon), an acrylic resin film, a polyurethane resin film, a polystyrene resin film, a polyvinyl chloride resin film, an ethylene vinyl acetate resin film, an acrylonitrile resin film, a fluorine film, a polycarbonate film, an AES resin film, and an ASA resin film.

The non-woven fabric is non-woven fabric comprising synthetic resin fiber, for example, polyamide, polyester, polyacrylic, polyolefin, or polyurethane fiber.

These sheet-like materials can be used singly or in combinations of two or more thereof. In terms of the difference between tensile loads described above and in terms of the tear strength described above, the base material is preferably a resin film, a polypropylene resin film, a polyester resin film, an acrylic resin film, and a polyamide resin film are more preferable, and an oriented polypropylene (OPP) film, a polyethylene terephthalate (PET) film, an acrylic resin film, and a polyamide resin film are further preferable.

The resin film may be a single-layer film or may be a multilayer film constituted by laminating two or more of the films described above.

In terms of improvement in the weather resistance, an ultraviolet absorber, a light stabilizer (HALS), and the like may be incorporated into the resin constituting the base material.

In terms of improvement in the weather resistance and improvement in the strength, the base material may be a resin film having a coating film on the surface thereof. The coating film is preferably a resin film, more preferably a urethane resin film, an epoxy resin film, or a fluororesin film, further preferably a fluororesin film, and even more preferably a difluoride fluororesin film or a trifluoride fluororesin film. The coating film may be provided on one side or may be provided on both sides of the base material, but is preferably provided at least on a side of the base material opposite to the surface on which the pressure-sensitive adhesive layer is provided. Use of these coating films can further enhance the weather resistance of the anticorrosive pressure-sensitive adhesive tape and further enhance the gloss retention described later.

(Gloss retention of base material after accelerated weather resistance test)

It is preferred that the base material of the anticorrosive pressure-sensitive adhesive tape of the present invention have a gloss retention of 80% or more after subjected to an accelerated weather resistance test in accordance with Cycle A in JIS K5600-7-7 for 500 hours. When the gloss retention is 80% or more, even in a case where the anticorrosive pressure-sensitive adhesive tape is irradiated with light over a long period, proceeding of deterioration of the base material is prevented, and the appearance of the anticorrosive pressure-sensitive adhesive tape can be prevented from being worsen. Additionally, light such as sunlight (particularly ultraviolet rays) can be sufficiently blocked to prevent both deterioration of the pressure-sensitive adhesive layer and decrease in adhesive force of the anticorrosive pressure-sensitive adhesive tape.

Considering this respect, the gloss retention of the base material constituting the anticorrosive pressure-sensitive adhesive tape of the present invention is preferably 85% or more and more preferably 90% or more. A higher gloss retention is more preferable, and its upper limit is 100%.

Although the method of making the gloss retention equal to or more than the above-described lower limit is not particularly limited, a material having weather resistance may be used for the base material. It is preferable to use a resin having weather resistance for the resin constituting the base material so that the base material itself has weather resistance. Additionally, weather resistance may be enhanced by blending an ultraviolet absorber, a light stabilizer (HALS), or the like into the resin constituting the base material.

In addition, the coating film having weather resistance described above may be provided, for example.

The gloss retention can be measured in the following method.

The anticorrosive pressure-sensitive adhesive tape (25 mm in width and 100 mm in length) is attached, and the specular glossiness of the base material is measured with respect to the surface of the tape from the base material side with a gloss meter (e.g., product name: "IG-340" manufactured by HORIBA, Ltd.). The specular glossiness is measured using a gloss meter of a geometric condition of 60° in accordance with JIS K5600-4-7. The specular glossiness obtained by the measurement at this time is used as a specular glossiness A. Thereafter, the tape is subjected to an accelerated weather resistance test in accordance with Cycle A in JIS K5600-7-7 for 500 hours. After the accelerated weather resistance test is performed, the specular glossiness of the base material of the tape is measured by the same method as performed before the test. The specular glossiness obtained in the measurement after the test is used as a specular glossiness B. From the two specular glossinesses obtained as above, the gloss retention of the tape is calculated. The expression for determining the gloss retention is as follows.

$$\text{Gloss retention (\%)} = (\text{specular glossiness B}/\text{specular glossiness A}) \times 100$$

(Thickness of base material)

The thickness of the base material is not particularly limited and is preferably 20 to 150 $\mu$m, more preferably 40 to 140 $\mu$m, further preferably 60 to 130 $\mu$m, and even more preferably 80 to 120 $\mu$m. When the thickness of the base material is equal to or more than these lower limits, the tear strength of the base material measured without forming a slit is made equal to or more than 1.7 N more easily. In addition, the difference between tensile loads is made equal to or less than 6.0 N/mm more easily. In addition, when the thickness of the base material is equal to or less than these upper limits, the difference between tensile loads is made equal to or more than 1.5 N/mm more easily.

<Pressure-sensitive adhesive layer>

The anticorrosive pressure-sensitive adhesive tape of the present invention comprises a pressure-sensitive adhesive layer on at least one side of the base material. The pressure-sensitive adhesive layer will be described below.

(Metal having a lower potential than that of iron)

The pressure-sensitive adhesive layer preferably comprises a metal having a lower potential than that of iron, especially when used for attachment to a steel material. Since the metal having a lower potential than that of iron (hereinafter, also referred to as a "sacrificial protective metal") is contained, the pressure-sensitive adhesive layer has the sacrificial protectability, and increases the anticorrosive property of the anticorrosive pressure-sensitive adhesive tape. The sacrificial protective metal is dispersed in the pressure-sensitive adhesive forming the pressure-sensitive adhesive layer.

Examples of the sacrificial protective metal include cadmium, chrome, zinc, manganese, and aluminum. Among these, zinc and aluminum are preferable, and zinc is particularly preferable. When zinc is used, the sacrificial protectability is excellent.

The sacrificial protective metal, which is dispersed as a filler in the pressure-sensitive adhesive, may be in any form, such as a particulate form, a scale-like form, or a spindle-like form, and is preferably in a particulate form. The sacrificial protective metal in a particulate form is easily dispersed in the pressure-sensitive adhesive layer with almost no decrease in the pressure-sensitive adhesivity of the pressure-sensitive adhesive layer.

Herein, a particulate form means a form having a small ratio of the length in the major axial direction to the length in the minor axial direction (aspect ratio), and the aspect ratio is, for example, 3 or less, and is preferably 2 or less. The particulate form is not particularly limited and may be a spherical shape or irregular shape such as a powder. The above-described metal in a particulate form has a particle size of, for example, 1 to 500 $\mu$m and preferably, 1 to 200 $\mu$m. The particle size herein means an average particle size determined by the laser diffraction method.

The content of the sacrificial protective metal in the pressure-sensitive adhesive layer is 0.5 to 20 mass%, for example, preferably 1 to 18 mass%, and more preferably 2 to 16 mass%, based on the total mass of the pressure-sensitive adhesive layer.

When the sacrificial protective metal content is equal to or more than any of these lower limits, the anticorrosion performance is enhanced by an increase in the sacrificial protectability, and when the content is equal to or less than any of these upper limits, the adhesive force is enhanced.

The pressure-sensitive adhesive layer may not contain the sacrificial protective metal. **In** the case of containing no sacrificial protective metal, in comparison with the case of containing one, the pressure-sensitive adhesive layer is more unlikely to be separated from an adherend by maintaining the adhesive force of the anticorrosive pressure-sensitive adhesive tape high. Thereby water and oxygen are blocked, and the anticorrosive property is more likely to be enhanced.

(Electroconductive material)

The pressure-sensitive adhesive layer preferably further contains an electroconductive material other than the sacrificial protective metal described above, in addition to the sacrificial protective metal. When the pressure-sensitive adhesive layer is allowed to contain an electroconductive material, it becomes easier to transfer electrons, emitted when the sacrificial protective metal is ionized, onto the adherend to thereby easily enhance the sacrificial protectability.

Examples of the electroconductive material include one or two or more selected from a carbon material, a metal material, a metal oxide material, an ionic polymer, and an electroconductive polymer.

Examples of the carbon material include carbon black, graphite, graphene, carbon nanotube, and acetylene black. Examples of the metal material include iron, and a metal having a higher potential than that of iron, such as gold, silver, copper, nickel, or an alloy including any of these. Examples of the metal oxide material include indium tin oxide (ITO), antimony trioxide (ATO), fluorine-doped tin oxide (FTO), and zinc oxide. Examples of the electroconductive polymer include polyacetylene, polypyrrole, PEDOT (polyethylene dioxythiophene), PEDOT/PSS (a composite of polyethylene dioxythiophene and polystyrene sulfonic acid), polythiophene, polyaniline, poly(p-phenylene), polyfluorene, polycarbazole, polysilane, or a derivative thereof. Examples of the ionic polymer include sodium polyacrylate and potassium polyacrylate.

These electroconductive materials may be used singly or in combinations of two or more thereof.

Among those described above, as the electroconductive material, carbon materials are preferred, and carbon nanotubes are more preferred.

(Carbon nanotube)

The pressure-sensitive adhesive layer preferably contains a carbon nanotube. Since the carbon nanotube is contained, the sacrificial protectability of pressure-sensitive adhesive layer can be enhanced and the adhesive force can be maintained at a high level; accordingly, an anticorrosive pressure-sensitive adhesive tape having both the adhesive force and the sacrificial protectability at higher levels can be obtained easily. The reason for this is probably as follows: although carbon nanotube is an electroconductive material, the amount of carbon nanotube necessary for developing the sacrificial protectability at a certain level is smaller than that of other kinds of the electroconductive material, and thus the extent of the decrease in the adhesive force by carbon nanotube is smaller.

The carbon nanotube is a material in a tube form that is made of carbon. The carbon nanotube is excellent in the electrical properties, and can be combined with a resin or the like to form, for example, a sheet having a high electroconductivity. The carbon nanotube is a substance having a structure in which a graphite sheet is cylindrically rolled up, the graphite sheet having a carbon atomic arrangement in the form of a reticulated pattern of hexagons. A mono-layered roll is called a single-wall carbon nanotube, and a multi-layered roll is called a multi-wall carbon nanotube.

In the anticorrosive pressure-sensitive adhesive tape of one embodiment of the present invention, the kind of the carbon nanotube is not particularly limited, and may be any of a single-wall carbon nanotube, a multi-wall carbon nanotube, and a mixture including them in an arbitral ratio. The carbon nanotube can be used that are produced by any of various methods including an arc discharge method, a laser evaporation method, and a chemical vapor deposition method (CVD method).

The average diameter of the carbon nanotube is preferably 1 to 100 nm, and more preferably 2 to 15 nm. The average length of the carbon nanotube is preferably 0.1 to 1000 $\mu$m, and more preferably 10 to 500 $\mu$m. The aspect ratio (average length/ average diameter) of the carbon nanotube is preferably 10 to 100000, and more preferably 500 to 30000.

The diameter of the carbon nanotube means the outer diameter in a case of a single-wall carbon nanotube, and the outer diameter of the outermost tube in a case of a multi-wall carbon nanotube. The diameter and the length of the carbon nanotube may be measured in an image obtained by observation under a transmission electron microscope (TEM), for example, and the average diameter and the average length may be determined as an arithmetic average on arbitral fifty nanotubes.

In terms of the sacrificial protectability and adhesive force of the pressure-sensitive adhesive layer, the content of the electroconductive material in the pressure-sensitive adhesive layer is preferably 0.005 to 10 mass%, more preferably 0.005 to 5 mass%, and further preferably 0.006 to 3 mass%, based on the total mass of the pressure-sensitive adhesive layer.

When the electroconductive material is a carbon nanotube, the content of the carbon nanotube in the pressure-sensitive adhesive layer is preferably 0.0005 to 0.7 mass%, more preferably 0.005 to 0.05 mass%, and further preferably 0.006 to 0.045 mass%, based on the total mass of the pressure-sensitive adhesive layer.

When the carbon nanotube content is equal to or more than any of these lower limits, the sacrificial protectability is likely to be enhanced, and when the carbon nanotube content is equal to or less than any of these upper limits, the adhesive force is likely to be enhanced.

(Pressure-sensitive adhesive)

The pressure-sensitive adhesive layer is preferably made with a pressure-sensitive adhesive. The kind of the pressure-sensitive adhesive is not particularly limited, and examples thereof include a pressure-sensitive acrylic adhesive, a pressure-sensitive rubber adhesive, a pressure-sensitive urethane adhesive, and a pressure-sensitive silicone adhesive. These may be used singly or may be used in combination.

The pressure-sensitive adhesive layer is preferably made with the pressure-sensitive acrylic adhesive among them.

(Pressure-sensitive acrylic adhesive)

The pressure-sensitive acrylic adhesive is a pressure-sensitive adhesive containing an acrylic polymer obtained by polymerizing a polymerizable monomer including an alkyl (meth)acrylate monomer (A).

The term "alkyl (meth)acrylate" herein has a concept encompassing both alkyl acrylate and alkyl methacrylate, and this is also applied to other similar terms mutatis mutandis. The term "polymerizable monomer" has a concept that may encompass not only a compound having no repeating unit but also a monomer itself having a repeating unit, such as an olefin polymer (C), which will be described later, as long as the monomer is a compound copolymerizable with the alkyl (meth)acrylate monomer (A).

(Alkyl (meth)acrylate monomer (A))

The alkyl (meth)acrylate monomer (A) is an ester between (meth)acryl acid and an aliphatic alcohol, and is preferably an alkyl ester derived from an aliphatic alcohol having an alkyl group preferably having 2 to 14 carbon atoms, and more preferably 4 to 10 carbon atoms. When the number of carbon atoms of the alkyl group is within this range, the adhesive force is easily enhanced, and the storage modulus at 23°C of a pressure-sensitive adhesive described below is easily adjusted to fall within a predetermined range.

Specific examples of the alkyl (meth)acrylate monomer (A) include ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, n-octyl (meth)acrylate, isooctyl (meth)acrylate, nonyl (meth)acrylate, decyl (meth)acrylate, undecyl (meth)acrylate, dodecyl (meth)acrylate, tridecyl (meth)acrylate, and tetradecyl (meth)acrylate.

Among these, n-butyl (meth)acrylate, hexyl (meth)acrylate, heptyl (meth)acrylate, 2-ethylhexyl (meth)acrylate, and n-octyl (meth)acrylate are preferable, and n-butyl (meth)acrylate, 2-ethylhexyl (meth)acrylate, or a combination thereof are more preferable.

The alkyl (meth)acrylate monomers (A) may be used singly or may be used in combinations of two or more thereof.

The constituent unit derived from the alkyl (meth)acrylate monomer (A) is the main component of the pressure-sensitive adhesive layer, and the content thereof is generally 30 mass% or more, preferably 50 mass% or more, and more preferably 70 mass% or more, based on the total mass of the pressure-sensitive adhesive layer. Such a large content of the alkyl (meth)acrylate monomer (A) can impart the desirable adhesive force to the pressure-sensitive adhesive layer. The above-described content of the constituent unit derived from the alkyl (meth)acrylate monomer (A) is, for example, 97 mass% or less, preferably 95 mass% or less, and more preferably 90 mass% or less, in order for a certain amount or more of other components to be contained.

The content of the constituent unit derived from the alkyl (meth)acrylate monomer (A) in the pressure-sensitive adhesive layer is substantially the same as the content of the alkyl (meth)acrylate monomer (A) in a pressure-sensitive adhesive composition, which will be described later, and accordingly, the former can be expressed by replacing with the latter. The same also applies to the components other than the component (A), including the components (B) and (C), which will be described below.

(Polar group-containing vinyl monomer (B))

The polymerizable monomer preferably contains a polar group-containing vinyl monomer (B) in addition to the alkyl (meth)acrylate monomer (A). The polar group-containing vinyl monomer (B) has a polar group and a vinyl group. The adhesive force to an adherend is easily enhanced by using the polar group-containing vinyl monomer (B).

Examples of the polar group-containing vinyl monomer (B) include a vinyl carboxylate such as vinyl acetate; a vinyl group-containing carboxylic acid such as (meth)acrylic acid and itaconic acid, and an anhydride thereof; a vinyl monomer having a hydroxyl group such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate, and polyoxypropylene (meth)acrylate; and a nitrogen-containing vinyl monomer such as (meth)acrylonitrile, N-vinylpyrrolidone, N-vinylcaprolactam, N-vinyllaurilolactam, (meth)acryloylmorpholin, (meth) acrylamide, dimethyl (meth)acrylamide, N-methylol (meth) acrylamide, N-butoxy methyl (meth)acrylamide, and dimethylaminomethyl (meth)acrylate.

Among these, a vinyl group-containing carboxylic acid such as (meth)acrylic acid and itaconic acid, and an anhydride thereof are preferable. (Meth)acrylic acid is more preferable, and acrylic acid is further preferable. These for the polar group-containing vinyl monomer (B) may be used singly or may be used in combinations of two or more thereof.

In a case where the polar group-containing vinyl monomer (B) is used, the content of the constituent unit derived from the polar group-containing vinyl monomer (B) in the pressure-sensitive adhesive layer is preferably 1 to 15 parts by mass, more preferably 2 to 12 parts by mass, and further preferably 3 to 10 parts by mass, per 100 parts by mass of the constituent unit derived from the alkyl (meth)acrylate monomer (A). The adhesive force of the anticorrosive pressure-sensitive adhesive tape is easily enhanced when the content of the polar group-containing vinyl monomer (B) is within such a range.

(Olefin polymer (C))

Preferably, the polymerizable monomer further includes an olefin polymer having a polymerizable bond on either one end, (C). The adhesive force of the anticorrosive pressure-sensitive adhesive tape is easily enhanced by using such an olefin polymer (C).

The polymerizable bond means an unsaturated carbon-carbon bond that is capable of polymerizing with a polymerizable monomer. Examples thereof include an unsaturated double bond, and preferable examples thereof include a (meth)acryloyl group.

Examples of the olefin polymer (C) include a polyolefin having a (meth)acryloyl group on either one end. The polyolefin means a polymer of an aliphatic hydrocarbon compound having a double bond, such as ethylene, propylene, butane, butadiene, or isoprene, or a hydrogenated product thereof.

Examples of the polyolefin having a (meth)acryloyl group on either one end include a polyethylene having a (meth)acryloyl group on either one end that is prepared by reacting a polyethylene having an epoxy group on either one end with (meth)acrylic acid. Other examples include a polybutadiene having a (meth)acryloyl group on either one end and a hydrogenated product thereof, and examples of a commercially available product thereof include "L-1253" manufactured by KURARAY CO., LTD.

The olefin polymer (C) preferably has a number-average molecular weight of 500 to 20000, and more preferably 1000 to 10000. The number-average molecular weight may be measured by gel permeation chromatography (GPC) and calculated using a calibration curve of standard polystyrene.

The content of the constituent unit derived from the olefin polymer (C) in the pressure-sensitive adhesive layer is preferably 1 to 20 parts by mass, more preferably 2 to 15 parts by mass, and further preferably 4 to 12 parts by mass, per 100 parts by mass of the constituent unit derived from the alkyl (meth)acrylate monomer (A).

(Crosslinking agent (D))

Preferably, the polymerizable monomer further includes a crosslinking agent. Example of the crosslinking agent include a polyfunctional monomer having two or more vinyl groups, and preferable examples include a polyfunctional (meth)acrylate having two or more (meth)acryloyl groups. The adhesive force of the pressure-sensitive adhesive layer is easily adjusted to fall within an appropriate range by using the polyfunctional monomer.

Examples of the polyfunctional (meth)acrylate include, but not limited to, hexanediol di(meth)acrylate, ethoxylated bisphenol A di(meth)acrylate, triacrylate of tris(2-hydroxyethyl) isocyanurate, ethoxylated trimethylolpropane triacrylate, proxyated trimethylolpropane triacrylate, proxiled glyceryl triacrylate, diacrylate of neopentyl glycol adipate, and also polymers, such as polyethylene glycol di(meth)acrylate, polypropylene glycol di(meth)acrylate, and liquid hydrogenated 1,2-polybutadiene di(meth)acrylate. Among these polyfunctional (meth)acrylates, the polymer is preferable, and liquid hydrogenated 1,2-polybutadiene di(meth)acrylate is more preferable. Examples of a commercially available product of liquid hydrogenated 1,2-polybutadiene di(meth)acrylate include "TEAI-1000" manufactured by NIPPON SODA CO., LTD.

The content of the constituent unit derived from the crosslinking agent in the pressure-sensitive adhesive layer is preferably 0.1 to 4 parts by mass, more preferably 0.3 to 3 parts by mass, and further preferably 0.5 to 2 parts by mass, per 100 parts by mass of the constituent unit derived from the alkyl (meth)acrylate monomer (A). When the content of the crosslinking agent is within the above ranges, the storage modulus and adhesive force of the pressure-sensitive adhesive layer are easily adjusted to fall within a predetermined range.

(Tackifier resin)

The pressure-sensitive acrylic adhesive may contain a tackifier resin in terms of enhancing the adhesive force. The tackifier resin is preferably a tackifier resin having less capability of inhibiting polymerization, including hydrogenated terpene resin, hydrogenated rosin, disproportionated rosin resin, and petroleum resin. Since a tackifier resin having many double bonds inhibits the polymerization reaction, a hydrogenated tackifier resin is preferable among the above, and a hydrogenated petroleum resin is particularly preferable.

The softening point of the tackifier resin may be about 95°C or more in terms of enhancing the cohesive force and the adhesive force of the pressure-sensitive adhesive. The tackifier resin preferably includes that having a softening point of 120°C or more, and for example, that having a softening point of 95°C or more and less than 120°C and that having a softening point of 120°C or more and 150°C or less may be used in combination. The softening point can be measured by the ring-and-ball test method defined by JIS K2207.

The content of the tackifier resin in the pressure-sensitive acrylic adhesive is preferably 5 to 40 parts by mass, more preferably 7 to 35 parts by mass, and further preferably 10 to 25 parts by mass, per 100 parts by mass of the constituent unit derived from the alkyl (meth)acrylate monomer (A).

(Fine particle)

The pressure-sensitive acrylic adhesive may contain a fine particle. The adhesive force can be ied when the fine particle is contained.

Examples of the fine particle include an inorganic hollow particles such as a glass balloon, a shirasu balloon, and a fly ash balloon; an organic hollow particles made of polymethyl methacrylate, acrylonitrile/vinylidene chloride copolymer, polystyrene, phenolic resin, etc.; an inorganic fine particle such as glass beads, silica beads, and synthetic mica; and an organic fine particle made of ethyl polyacrylic acid, polyurethane, polyethylene, polypropylene, etc.

The content of the fine particle in the pressure-sensitive acrylic adhesive is preferably 0.1 to 15 parts by mass, more preferably 0.5 to 10 parts by mass, and further preferably 0.7 to 5 parts by mass, per 100 parts by mass of the constituent unit derived from the alkyl (meth)acrylate monomer (A).

(Other components)

In addition to the components described hereinabove, the pressure-sensitive acrylic adhesive used in the pressure-sensitive adhesive layer may contain various additives conventionally used for a pressure-sensitive adhesive, including a plasticizer, a softener, a pigment, a dye, a dispersant, a photopolymerization initiator, and a flame retardant.

(Method for producing pressure-sensitive acrylic adhesive and pressure-sensitive adhesive layer)

The pressure-sensitive acrylic adhesive can be obtained by irradiating a pressure-sensitive adhesive composition with light to polymerize the polymerizable monomer, the composition including the polymerizable monomer described above, and a sacrificial protective metal, and an electroconductive material, which are used as necessary. The pressure-sensitive adhesive composition may also include at least one from the tackifier resin, the fine particle, and the other components, which have been described hereinabove, as necessary.

The method will be described more specifically. First, to a reaction container, such as a glass container, are put the polymerizable monomer, the sacrificial protective metal and the electroconductive material, which are added as necessary, as well as the tackifier resin, the fine particle, and the other components, which are added as necessary, and these are mixed to obtain a pressure-sensitive adhesive composition.

Next, in order to remove dissolved oxygen in the pressure-sensitive adhesive composition, an inert gas such as a nitrogen gas, generally, is fed thereto to purge oxygen. Then, the pressure-sensitive adhesive composition is applied to a release sheet or to, for example, a support such as a resin film, woven fabric, or non-woven fabric, and thereafter irradiated with light to polymerize the polymerizable monomer, thereby obtaining a pressure-sensitive adhesive layer.

The process from the application of or impregnation with the pressure-sensitive adhesive composition to the irradiation with light is preferably carried out in an inert gas atmosphere or in a condition that oxygen is blocked by a film or the like.

In this production method, the pressure-sensitive adhesive composition obtained by mixing the components may be pre-polymerized before application to the release sheet, the support, or the like, in order to increase the viscosity.

(Pressure-sensitive rubber adhesive)

Next, the pressure-sensitive rubber adhesive used for the pressure-sensitive adhesive layer will be described. The pressure-sensitive rubber adhesive contains a rubber component and a tackifier resin. As the rubber component, a styrene/isoprene block copolymer is preferably used. The styrene/isoprene block copolymer preferably has a diblock ratio of 25 to 70 mass%, more preferably 30 to 65 mass%, and further preferably 45 to 60 mass%. The diblock here refers to a diblock composed of styrene and isoprene. When the diblock ratio is within the above-described range, the adhesive force is easily enhanced. **In** addition to the diblock, the styrene/isoprene block copolymer also includes those having three or more blocks, such as a triblock composed of styrene, isoprene, and styrene blocks.

The amount of styrene in the styrene/isoprene block copolymer is not particularly limited, and preferably 14 to 24 mass%, and more preferably 15 to 18 mass%. When the amount of styrene is 14 mass% or more, the pressure-sensitive adhesive having a high cohesive is easily obtained. When the amount of styrene is 24 mass% or less, the pressure-sensitive adhesive has a cohesive force at an appropriate level to easily develop an adhesive force.

The molecular weight of the styrene/isoprene block copolymer is not particularly limited, and the weight-average molecular weight thereof is preferably 100,000 to 400,000, and more preferably 150,000 to 250,000. The weight-average molecular weight as used herein refers to that measured as a molecular weight in terms of polystyrene by the gel permeation chromatography (GPC) method.

Various tackifier resins can be used as the tackifier resin used for the pressure-sensitive rubber adhesive, and preferably, a petroleum-based resin, a terpene resin, or a kumaron resin is used. The tackifier resins can be used singly or in combinations of two or more thereof, and it is preferable to use a petroleum-based resin in combination with at least one selected from a terpene resin and a kumaron resin. Such combinations of the tackifier resins are likely to render the adhesive force great.

Examples of the petroleum-based resin include an aliphatic petroleum resin (C5 petroleum resin), an alicyclic petroleum resin, and an aromatic petroleum resin, and the alicyclic petroleum resin is preferable in terms of the compatibility with the styrene/isoprene block copolymer. It is preferable to use a petroleum-based resin having a softening point of about 90 to 120°C.

As the terpene resin, one having a softening point of about 80 to 120°C can be used, and one having a softening point less than 100°C is preferable in terms of securing the adhesive force. As the kumaron resin, one preferably having a softening point of 110 to 130°C, more preferably 115 to 125°C is used in order to secure the cohesive force.

The amount of the tackifier resin is preferably 60 to 250 parts by mass, more preferably 100 to 200 parts by mass, and further preferably 110 to 180 parts by mass, per 100 parts by mass of the rubber component. When the amount of the tackifier resin blended is within the above-described range, the cohesive force can be greater so that an appropriate adhesive force can be imparted.

When the petroleum-based resin is used in combination with at least one selected from the terpene resin and the kumaron resin, the amount of the petroleum-based resin is preferably 50 to 200 parts by mass, preferably 60 to 150 parts by mass, and more preferably 60 to 110 parts by mass, per 100 parts by mass of the rubber component. On the other hand, the amount of the terpene resin is preferably 10 to 70 parts by mass, more preferably 20 to 60 parts by mass, and further preferably 30 to 50 parts by mass, per 100 parts by mass of the rubber component. The amount of the kumaron resin is preferably 10 to 60 parts by mass, more preferably 15 to 50 parts by mass, and further preferably 20 to 40 parts by mass, per 100 parts by mass of the rubber component.

As in the pressure-sensitive acrylic adhesive, the pressure-sensitive rubber adhesive may contain the fine particle described hereinbefore, and the pressure-sensitive rubber adhesive may also contain a sacrificial protective metal, an electroconductive material, a softener, an antioxidant, a filler, and the like, as necessary.

(Pressure-sensitive urethane adhesive)

The pressure-sensitive urethane adhesive described above is not particularly limited, and examples thereof include a urethane resin obtained by reacting at least a polyol and a polyisocyanate compound. Examples of the polyol include a polyether polyol, a polyester polyol, a polycarbonate polyol, and a polycaprolactone polyol. Examples of the polyisocyanate compound include diphenylmethane diisocyanate, tolylene diisocyanate, and hexamethylene diisocyanate. These pressure-sensitive urethane adhesives may be used singly or in combinations of two or more thereof.

A urethane resin obtained by reacting a polyurethane polyol and a polyfunctional isocyanate-based curing agent may also be used as the pressure-sensitive urethane adhesive. Examples of the polyurethane polyol include a reaction product of the above-described polyol and polyisocyanate compound, and a reaction product of the polyol, the polyisocyanate compound, and a chain extender such as a diamine. The polyfunctional isocyanate-based curing agent may be a compound having two or more isocyanate groups, and the isocyanate compound described above may be used therefor.

The pressure-sensitive urethane adhesive may contain the fine particle described hereinbefore in addition to the urethane resin, and the pressure-sensitive urethane adhesive may also contain a tackifier resin, a sacrificial protective metal, an electroconductive material, a softener, an antioxidant, and a filler, and the others, if necessary.

(Pressure-sensitive silicone adhesive)

Examples of the pressure-sensitive silicone adhesive include pressure-sensitive silicone adhesives of addition reaction-type, peroxide curing-type, and condensation reaction-type. Among these, the pressure-sensitive silicone adhesive of addition reaction-type is preferably used in terms of curability at a low temperature for a short time. The pressure-sensitive silicone adhesive of condensation reaction type is cured while the pressure-sensitive adhesive layer is formed. When the pressure-sensitive silicone adhesive of condensation-reaction type is used as the pressure-sensitive silicone adhesive, the pressure-sensitive silicone adhesive may include a catalyst such as a platinum catalyst.

The pressure-sensitive silicone adhesive may contain a fine particle, and a crosslinking agent and various additives for controlling the adhesive force may also be added thereto.

(Storage elastic modulus)

The pressure-sensitive adhesive layer preferably has a storage modulus at 23°C of 50000 to 1000000 Pa. When the storage modulus at 23°C falls within the above range, in the case in which the pressure-sensitive adhesive layer is damaged by an external impact or the like, the force to restore the damaged portion (hereinafter, also referred to as a self-restoring force) increases. As a result, formation of rust is suppressed, and the anticorrosion performance is enhanced.

The storage modulus at 23°C of the pressure-sensitive adhesive layer is more preferably 200000 to 800000 Pa and further preferably 300000 to 700000 Pa, in terms of enhancing the self-restoring force and enhancing the anticorrosion performance.

The storage elastic modulus can be calculated by measuring a viscoelastic spectrum using DVA-200 (manufactured by IT Measurement Control Co., Ltd.), for example, under conditions: shear mode: 10 Hz, amount of distortion: 0.1%, temperature range: -100°C to 100°C, and temperature elevation rate: 10°C/min.

(Thickness)

The thickness of the pressure-sensitive adhesive layer is preferably 50 to 3000 $\mu$m, more preferably 100 to 2000 $\mu$m, still more preferably 120 to 1500 $\mu$m, even more preferably 200 to 1200 $\mu$m, and particularly preferably 300 to 1000 $\mu$m. When the thickness is 50 $\mu$m or more, the self-restoring force and the like increase, the anticorrosive property of the anticorrosive pressure-sensitive adhesive tape can be enhanced, and the adhesive force easily increases. In addition, when the thickness of the pressure-sensitive adhesive layer is 3000 $\mu$m or less, an effect of enhancing the anticorrosion performance in accordance with the thickness can be achieved.

<Surface protection film>

When the pressure-sensitive adhesive layer is provided on one side of the base material, the anticorrosive pressure-sensitive adhesive tape of the present invention may further include a surface protection film, which is provided on the side of the base material opposite to the pressure-sensitive adhesive layer side for protecting the surface on the side of the base material opposite to the pressure-sensitive adhesive layer side.

The surface protection film in the anticorrosive pressure-sensitive adhesive tape of the present invention is not particularly limited, as long as it is a resin film capable of suppressing deformation of the base material, which causes wrinkles in the anticorrosive pressure-sensitive adhesive tape. Examples of the resin film used for the surface protection film in the anticorrosive pressure-sensitive adhesive tape of the present invention include a film of polyester resin such as polyethylene terephthalate, polybutylene terephthalate, and polyethylene naphthalate; a film of polypropylene resin such as biaxially oriented polypropylene (OPP); a film of polyamide resin such as biaxially oriented nylon (ONy); a polyimide resin film; a polyacetal resin film; a polycarbonate resin film; a modified polyphenylene oxide resin film; a polyphenylene sulfide resin film; a polysulfone resin film; a polyether ketone resin film; and biaxially oriented polypropylene. These resin films can be used singly or in combinations of two or more thereof. Among these resin films, in terms of suppression of occurrence of wrinkles in the anticorrosive pressure-sensitive adhesive tape during application to a large area, at least one resin film selected from the group consisting of a polyester resin film, a polypropylene resin film, and a polyamide resin film is preferable.

The thickness of the surface protection film is preferably 25 $\mu$m or more and 200 $\mu$m or less, more preferably 25 $\mu$m or more and 150 $\mu$m or less, still more preferably 38 $\mu$m or more and 100 $\mu$m or less, and even more preferably 38 $\mu$m or more and 75 $\mu$m or less. When the surface protection film has a thickness of 25 $\mu$m or more, occurrence of wrinkles in the anticorrosive pressure-sensitive adhesive tape during application to a large area can be further suppressed. When the thickness is 200 $\mu$m or less, adhesion of the tape to an adherend is easily enhanced.

Although the surface protection film may be directly stacked onto the base material, it is preferable to laminate the surface protection film and the base material via an adhesive layer in terms of ensuring a certain level of adhesion to the base material. The adhesive layer may be composed of a known adhesive or a pressure-sensitive adhesive, or the adhesive layer may be composed of a thermoplastic resin. In the case of the thermoplastic resin, the adhesive layer is also referred to as a pseudo adhesive layer, and the surface protection film may be attached to the base material via the pseudo adhesive layer through thermal lamination or the like.

The method for laminating the base material and the surface protection film may be carried out using a known lamination method such as thermal lamination, hot melt lamination, solvent-free lamination, wet lamination, dry lamination, extrusion coating lamination, or coextrusion lamination, for example.

(Difference between tensile loads)

In the anticorrosive pressure-sensitive adhesive tape of the present invention provided with the surface protection film, a difference between the tensile load at 2.5% elongation and the tensile load at 0.5% elongation in the laminate formed of the base material and the surface protection film is preferably 2.5 N/mm or more and 6.0 N/mm or less. When the difference between the tensile load at 2.5% elongation and the tensile load at 0.5% elongation in the laminate including the base material and the surface protection film is 2.5 N/mm or more, occurrence of wrinkles in the anticorrosive pressure-sensitive adhesive tape during application to a large area can be further suppressed by attaching the anticorrosive pressure-sensitive adhesive tape to an adherend. When the difference between the tensile load at 2.5% elongation and the tensile load at 0.5% elongation in the laminate including the base material and the surface protection film is 6.0 N/mm or less, the anticorrosive pressure-sensitive adhesive tape can be more easily attached to an adherend. From such a point of view, the difference between the tensile load at 2.5% elongation and the tensile load at 0.5% elongation in the laminate including the base material and the surface protection film is more preferably 3.0 N/mm or more and 5.8 N/mm or less and further preferably 3.2 N/mm or more and 5.5 N/mm or less. The difference between the tensile load at 2.5% elongation and the tensile load at 0.5% elongation in the laminate including the base material and the surface protection film can be adjusted by the material and thickness of the surface protection film and the material and thickness of the base material.

(Peel force)

Peel force required when the surface protection film is peeled off from the anticorrosive pressure-sensitive adhesive tape of the present invention is, for example, 0.05 N/m or more and 1.0 N/m or less and preferably 0.1 N/m or more and 0.6 N/m or less. When the peel force required when the surface protection film is peeled off from the base material is 0.1 N/m or more, the surface protection film can further be prevented from unintentionally being peeled off. When the peel force required when the surface protection film is peeled off from the anticorrosive pressure-sensitive adhesive tape is 0.6 N/m or less, the surface protection film can be promptly peeled off from the anticorrosive pressure-sensitive adhesive tape, and workability is further enhanced. From such a point of view, the peel force required when the surface protection film is peeled off from the base material is more preferably 0.1 N/m or more and 0.4 N/m or less and still more preferably 0.1 N/m or more and 0.3 N/m or less. Note that the peel force required when the surface protection film is peeled off from the base material can be measured by the method described in the examples described later.

As described above, the peel force required when the surface protection film is peeled off from the base material can be adjusted, as appropriate, by conditions for the lamination method, the material for the adhesive layer between the base material and the surface protection film, and the like.

<Presence or absence of rust in cyclic corrosion test>

It is preferable that the anticorrosive pressure-sensitive adhesive tape of the present invention suffer no formation of rust in a cyclic corrosion test in accordance with JIS K5600-7-9 (Testing methods for paints - Part 7: Long-period performance of film - Section 9: Determination of resistance to cyclic corrosion conditions - Salt Fog/dry/humidity, Cycle D). Since no rust is formed in the cyclic corrosion test, the anticorrosive pressure-sensitive adhesive tape of the present invention has an excellent anticorrosive property. Formation of rust can be suppressed by adjusting the composition, thickness, and the like of the pressure-sensitive adhesive layer included in the anticorrosive pressure-sensitive adhesive tape.

Presence or absence of formation of rust in the cyclic corrosion test can be checked as follows.

The anticorrosive pressure-sensitive adhesive tape of the present invention is attached to a test plate specified in JIS K5600-7-9 to prepare a test piece. In this case, the test piece is prepared by attaching the tape such that the test plate surface is brought into contact with the pressure-sensitive adhesive layer of the anticorrosive pressure-sensitive adhesive tape. The size of the anticorrosive pressure-sensitive adhesive tape is 150 mm in length and 70 mm in width.

Then, a cut scratch is made on the test piece from the side of the anticorrosive pressure-sensitive adhesive tape. The cut scratch is formed by making two linear scratches so as to be crossed with each other (i.e., scratches are made like a cross mark). In this case, each of the scratches is allowed to have a length of 70 mm, and the two scratches are crossed at an angle of 90°. The cut scratch is imparted using a single-blade cutter so as to reach the test plate as the base, as specified in JIS K5600-7-9.

Thereafter, the test piece having the cut scratch is subjected to a salt water spraying test based on Cycle D in Appendix 1 of JIS K5600-7-9. The test is performed in 28 cycles (168 hours in total).

The test piece after the salt water spraying test is observed to check presence or absence of rust in the cut scratch portion.

When the anticorrosive pressure-sensitive adhesive tape of the present invention includes the surface protection film, the above-described test is performed after the surface protection film is peeled off.

<Adhesive force after cyclic corrosion test>

The adhesive force of the anticorrosive pressure-sensitive adhesive tape of the present invention after performing a cyclic corrosion test in accordance with JIS K5600-7-9 (Testing methods for paints - Part 7: Long-period performance of film - Section 9: Determination of resistance to cyclic corrosion conditions - Salt Fog/dry/humidity, Cycle D) is, for example, 10 N/25 mm or more, preferably 20 N/25 mm or more, more preferably 25 N/25 mm or more, and further preferably 30 N/25 mm or more. When the adhesive force is 20 N/25 mm or more, long-term adhesive force can be sufficiently secured, the anticorrosive pressure-sensitive adhesive tape becomes less likely to be separated from an adherend such as steel material, thereby preventing a decrease in anticorrosive property.

On the other hand, the upper limit of the adhesive force is not particularly limited but is preferably 200 N/25 mm or less in view of practical viewpoints.

The adhesive force after the cyclic corrosion test of the anticorrosive pressure-sensitive adhesive tape is measured as follows.

The anticorrosive pressure-sensitive adhesive tape of the present invention is attached to a stainless plate (SUS plate) to prepare a specimen for adhesive force evaluation. In this case, the specimen for adhesive force evaluation is prepared by attaching the tape such that the SUS plate surface is brought into contact with the pressure-sensitive adhesive layer of the anticorrosive pressure-sensitive adhesive tape. The size of the anticorrosive pressure-sensitive adhesive tape 10 is 100 mm in length and 25 mm in width.

The specimen for adhesive force evaluation is subjected to a salt water spraying test based on Cycle D in Appendix 1 of JIS K5600-7-9. The test is performed in 28 cycles (168 hours in total).

The specimen for adhesive force evaluation after the salt water spraying test is subjected to a peeling test of the anticorrosive pressure-sensitive adhesive tape for measuring the adhesive force. The peeling test is performed with a tensile tester under conditions of a peeling angle of 180° and a rate of 300 mm/min, and an average value of loads (N) detected over that interval is used as the adhesive force.

<Structure of anticorrosive pressure-sensitive adhesive tape>

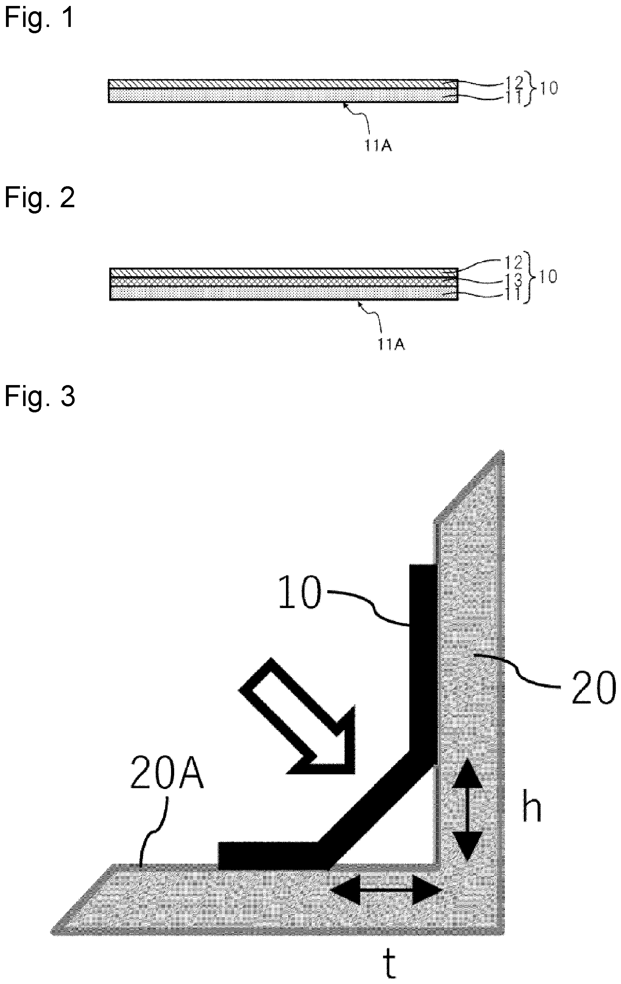

The anticorrosive pressure-sensitive adhesive tape of the present invention is, as shown in Fig. 1, an anticorrosive pressure-sensitive adhesive tape 10 which is preferably a pressure-sensitive adhesive single coated tape having a base material 12 and a pressure-sensitive adhesive layer 11 provided on one side of the base material 12. Consequently, the pressure-sensitive adhesive layer 11 can be protected by the base material 12.

The anticorrosive pressure-sensitive adhesive tape in each drawing is adhered to an adherend for use, with the surface 11A of the pressure-sensitive adhesive layer 11 serving as the adhesive surface.

The anticorrosive pressure-sensitive adhesive tape may be a double sided pressure-sensitive adhesive tape including a base material and a pressure-sensitive adhesive layer provided on each side of the base material, not shown.

As described above, the pressure-sensitive adhesive layer in the present invention may not contain a metal having a lower potential than that of iron. In this case, in order to enhance the anticorrosive property of the anticorrosive pressure-sensitive adhesive tape 10, preferably, the anticorrosive pressure-sensitive adhesive tape 10 further comprises a metal layer 13 between the base material 12 and the pressure-sensitive adhesive layer 11, and the metal layer 13 is a layer of a metal having a lower potential than that of iron, as shown in Fig. 2. As the metal having a lower potential than that of iron, those mentioned above are used without particular limitation. The metal layer 13 is more preferably a layer of zinc. The metal layer 13 specifically may be adhered to the base material 12 with an adhesive or the like or may be formed on the base material 12 by sputtering, vacuum deposition, or the like. The metal layer 13 also may be a metal film formed by coating a metal on the surface of the pressure-sensitive adhesive layer 11 by sputtering, vacuum deposition, or the like.

The metal layer 13 is formed directly on the pressure-sensitive adhesive layer 11 in a form so as to be interposed between the base material 12 and the pressure-sensitive adhesive layer 11. In other words, the metal having a lower potential than that of iron constituting the metal layer 13 comes in contact with the pressure-sensitive adhesive layer 11. Once the metal having a lower potential than that of iron comes in contact with the pressure-sensitive adhesive layer 11 in this manner, electrons to be emitted in ionization can easily migrate to the pressure-sensitive adhesive layer 11, and thus the anticorrosive property of the anticorrosive pressure-sensitive adhesive tape 10 is enhanced. Also in this case, in terms of the anticorrosive property of the anticorrosive pressure-sensitive adhesive tape 10, the pressure-sensitive adhesive layer 11 preferably contains an electroconductive material other than the metal having a lower potential than that of iron.

The thickness of the metal layer 13 is preferably 2.5 $\mu$m or more. When the thickness of the metal layer 13 is 2.5

μm or more, the metal layer 13 can sufficiently supply electrons from the ionization of the metal in the metal layer 13, enabling a sufficient anticorrosive property of the anticorrosive pressure-sensitive adhesive tape 10 to be maintained. In terms of enhancing the anticorrosive property of the anticorrosive pressure-sensitive adhesive tape 10, the thickness of the metal layer 13 is more preferably 5 μm or more. In terms of achieving the flexibility of the anticorrosive pressure-sensitive adhesive tape 10 to make the handleability and the like of the anticorrosive pressure-sensitive adhesive tape 10 favorable and in terms of easily closely attaching anticorrosive pressure-sensitive adhesive tape to an adherend having a complex shape, the thickness of the metal layer 13 is preferably 200 μm or less and more preferably 100 μm or less.

The anticorrosive pressure-sensitive adhesive tape of the present invention may include a release sheet attached on the surface of the pressure-sensitive adhesive layer. The release sheet may be peeled off from the pressure-sensitive adhesive layer before use of the anticorrosive pressure-sensitive adhesive tape to expose the pressure-sensitive adhesive layer and then may be attached on an adherend with the exposed pressure-sensitive adhesive layer. More specifically, of the sides of the pressure-sensitive adhesive layer, the release sheet may be attached to the side opposite to the side on which the base material 12 or the metal layer 13 is provided, that is, the surface 11A.

A resin film may be used as the release sheet, and the side to be attached to the pressure-sensitive adhesive layer is preferably a release-treated side, which has been release-treated with a silicone release agent or the like.

[Applications of anticorrosive pressure-sensitive adhesive tape]

The anticorrosive pressure-sensitive adhesive tape of the present invention is attached to various adherends and used to prevent corrosion of the adherends. The anticorrosive pressure-sensitive adhesive tape of the present invention is preferably adhered to the surface of an adherend made of any of various metal materials or the surface of an adherend made of concrete when in use because of being excellent in an adhesive force and an anticorrosive property. The metal material is preferably that containing at least one selected from the group consisting of iron and an alloy including iron. Specific examples of the alloy including iron include various steel materials, including alloy steels such as nickel chromium steel, nickel chrome molybdenum steel, chrome steel, chrome molybdenum steel, and manganese steel, and carbon steel.

The anticorrosive pressure-sensitive adhesive tape of the present invention is preferably used on an adherend having a complex surface shape. Specific examples of the adherend include an adherend with a surface having projections and depressions, such as a member having a welded portion, which member is provided by joining two members by welding. In a member having a welded portion, the welded portion corresponds to a projected portion. Examples of the adherend having a welded portion include welded piping. In welded piping, a seam at which two pipes are connected corresponds to the welded portion. The anticorrosive pressure-sensitive adhesive tape may be adhered to an adherend having a welded portion so as to cover the welded portion.

Generally, even when a welded portion is applied with an anticorrosive coating, the coating runs down until curing. Then the film thickness of the welded portion after coating becomes thinner than required, cracking is formed, a cracked face is exposed, and thus the welded portion relatively easily rusts. Attachment of the anticorrosive pressure-sensitive adhesive tape of the present invention thereto can appropriately prevent rust at the welded portion. The anticorrosive pressure-sensitive adhesive tape of the present invention, even when adhered to an adherend having a complex surface shape such as a welded portion, can achieve high adhesiveness and conformability without tearing and thus can exert an excellent anticorrosive property.

The anticorrosive pressure-sensitive adhesive tape of the present invention can suppress occurrence of wrinkles, lifting, and a tear during application to a large area, and thus can be suitably used for application to a large area. Specifically, it is preferable that the anticorrosive pressure-sensitive adhesive tape having a size of, for example, 200 $cm^2$ or more, 300 $cm^2$ or more, 400 $cm^2$ or more, 500 $cm^2$ or more, preferably 2000 $cm^2$ or more, more preferably 3000 $cm^2$ or more, still more preferably 4000 $cm^2$ or more, and even more preferably 5000 $cm^2$ or more be adhered to an adherend. The upper limit of the size of the anticorrosive pressure-sensitive adhesive tape is not particularly limited but is, for example, 100000 $cm^2$, preferably 50000 $cm^2$, more preferably 25000 $cm^2$, and still more preferably 10000 $cm^2$.

The anticorrosive pressure-sensitive adhesive tape of the present invention may be adhered to an adherend and then attached by pressure to the adherend under heating at 90 to 150°C, for example, and preferably at 90 to 130°C. Attaching the tape to an adherend under heating enables the tape to be adhered to the adherend with higher adhesiveness and conformability, easily achieving a high anticorrosive property. The pressure-sensitive adhesive tape may be heated with a known heating device such as an industrial dryer.

The anticorrosive pressure-sensitive adhesive tape of the present invention may be used for repair. Repair refers to anticorrosion-treating a metal material such as a steel material or concrete composing an existing structure, for example, a bridge, a steel tower, an elevated bridge, a chamber, a plant, a pier, or piping.

[Structure]

A structure of the present invention comprises the anticorrosive pressure-sensitive adhesive tape of the present invention, and an adherend formed of a metal material or an adherend formed of concrete, with the anticorrosive pressure-sensitive adhesive sheet of the present invention adhered to a surface of the adherend.

As described above, the anticorrosive pressure-sensitive adhesive tape of the present invention can suppress occurrence of wrinkles, lifting, and a tear during application to a large area and thus can be suitably used for application to a large area. From such a point of view, an attachment area of the anticorrosive pressure-sensitive adhesive tape of the present invention in the structure of the present invention is 200 cm$^2$ or more, 300 cm$^2$ or more, 400 cm$^2$ or more, 500 cm$^2$ or more, preferably 2000 cm$^2$ or more, more preferably 3000 cm$^2$ or more, still more preferably 4000 cm$^2$ or more, and even more preferably 5000 cm$^2$ or more. The upper limit of the range of the attachment area of the anticorrosive pressure-sensitive adhesive tape of the present invention in the structure of the present invention is not particularly limited but is, for example, 100000 cm$^2$, preferably 50000 cm$^2$, more preferably 25000 cm$^2$, and further preferably 10000 cm$^2$.

[Corrosion prevention method]

A corrosion prevention method of the present invention comprises a first process of providing the anticorrosive pressure-sensitive adhesive tape of the present invention provided with the surface protection film, and a second process of attaching the anticorrosive pressure-sensitive adhesive tape to an adherend and then peeling the surface protection film from the anticorrosive pressure-sensitive adhesive tape. Occurrence of wrinkles of the anticorrosive pressure-sensitive adhesive tape during application to a large area can be suppressed thereby. Hereinafter, each process of the corrosion prevention method of the present invention will be described.

(First process)

In the first process, the anticorrosive pressure-sensitive adhesive tape of the present invention provided with the surface protection film is provided. Since the anticorrosive pressure-sensitive adhesive tape of the present invention has been described above in the section of the anticorrosive pressure-sensitive adhesive tape, description for the anticorrosive pressure-sensitive adhesive tape of the present invention will be omitted.

(Second process)

In the second process, the anticorrosive pressure-sensitive adhesive tape is attached to an adherend, and the surface protection film is then peeled from the anticorrosive pressure-sensitive adhesive tape.

The shape of the adherend is not particularly limited and may be flat or a shape with a corner, such as H-section steel beam. The adherend may be attached to a part with a curved shape.

Although the adherend to which the corrosion prevention method of the present invention is applied is not particularly limited, examples thereof include buildings, air conditioning systems, building equipment, buried pipes, sanitary facilities, chemical plants, infrastructure such as roads and bridges, automobiles, railway vehicles, ships, chambers , electrical equipment, and electronic devices. The material of the adherend is preferably a metal material such as a steel material and concrete, as described above. More specifically, a concrete structure and a steel structure are particularly preferred as the adherend.

Examples

The present invention will now be described in more detail by way of examples, but the present invention is not limited to these examples.

[Measurement and evaluation methods]

The anticorrosive pressure-sensitive adhesive tape was measured and evaluated by the following methods in each of Examples and Comparative Examples.

<Difference between tensile loads>

The base material used in each of Examples and Comparative Examples was measured for each of the tensile load at 2.5% pulling and the tensile load at 0.5% pulling using a tensile tester, and the difference between both the tensile loads was calculated. Each of the measurements was conducted both in the MD and TD, and the difference between the tensile load at 2.5% pulling of the anticorrosive pressure-sensitive adhesive tape and the tensile load at 0.5% pulling of the anticorrosive pressure-sensitive adhesive tape was calculated for each direction. Of the differences between the tensile loads in the MD and the TD, the larger value was used as the difference between tensile loads. The measurement conditions are shown below.

Sample size: 24 mm in width × 80 mm in length
Distance between chucks: 50 mm
Tensile rate: 300 mm/min

<Tear strength>

The tear strength was measured by the same method as an Elmendorff tear method in accordance with JIS K7128-2 (1998) except that the measurement was conducted without forming a slit in the sample. The measurement was conducted in both the MD and the TD, and the smaller value was used as the tear strength (N) of the base material.

<Storage elastic modulus at 23°C>

The storage modulus at 23°C of the pressure-sensitive adhesive layer of the anticorrosive pressure-sensitive adhesive tape was calculated by measuring a viscoelastic spectrum using a dynamic viscoelasticity measuring apparatus (product name "DVA-200" manufactured by IT Measurement Control Co., Ltd.) under conditions: shear mode: 10 Hz, amount of distortion: 0.1%, temperature range: -100°C to 100°C, and temperature elevation rate: 10°C/min.

<Presence or absence of formation of rust in cyclic corrosion test>

According to the method described in the description, presence or absence of formation of rust in a cut scratch portion was visually checked in JIS K5600-7-9 (Testing methods for paints - Part 7: Long-period performance of film - Section 9: Determination of resistance to cyclic corrosion conditions - Salt Fog/dry/humidity, Cycle D).

<Adhesive force>

1. Preparation of specimen

The anticorrosive pressure-sensitive adhesive tape of each of Examples and Comparative Examples (25 mm in width and 100 mm in length) was attached to an SUS plate (50 mm in width and 125 mm in length) by reciprocating a 2-kg roller twice at a rate of 10 ± 0.5 mm/s to prepare a specimen for adhesive force evaluation. The specimen for adhesive force evaluation was used to measure the initial adhesive force (adhesive force before the test).

2. Measurement of adhesive force

The specimen obtained in 1 above was subjected to a combined cycle corrosion resistance test for 168 hours based on Cycle D of JIS K5600-7-9. Thereafter, the specimen was fixed to the chucks of a tensile tester ("TENSILON Universal Material Testing Instrument, manufactured by A&D Company, Limited). The anticorrosive pressure-sensitive adhesive tape was then pulled over 60 mm or more at a peeling angle of 180° and a rate of 300 mm/min under an environment of 23°C and 50 RH%, and an average value of loads (N) detected over that interval by the load cell was recorded, which was used as the adhesive force.

<Practical evaluation on projection conformability>

The projection conformability was evaluated by a procedure shown in 1 to 4 below.

1. As shown in Fig. 3, an anticorrosive pressure-sensitive adhesive tape 10 (30 mm square) was attached to a face to be an adhered 20A of an L-shaped SUS plate 20 such that the height h and the width t from the corner each were 2 mm.
2. A squeegee was pressed onto a portion in the anticorrosive pressure-sensitive adhesive tape 10 not adhered to the L-shaped SUS plate 20.
3. After the pressing in 2 above, the height h was measured, and additionally, the presence or absence of occurrence of a tear in the anticorrosive pressure-sensitive adhesive tape 10 was visually checked. When a tear occurred during the pressing in the anticorrosive pressure-sensitive adhesive tape 10, the height h was measured as 2 mm.
4. Based on the measurement of the height h obtained in 3 above, the projection conformability of the anticorrosive pressure-sensitive adhesive tape 10 was evaluated in accordance with the following criteria.

A: Lifting did not occur (the height h was 0 mm), and no tear occurred in the anticorrosive pressure-sensitive adhesive tape 10.
B: Lifting occurred (the height h was larger than 0 mm), or a tear occurred in the anticorrosive pressure-sensitive adhesive tape 10.
C: Lifting occurred (the height h was larger than 0 mm), and a tear occurred in the anticorrosive pressure-sensitive adhesive tape 10.

<Evaluation on large area applicability>

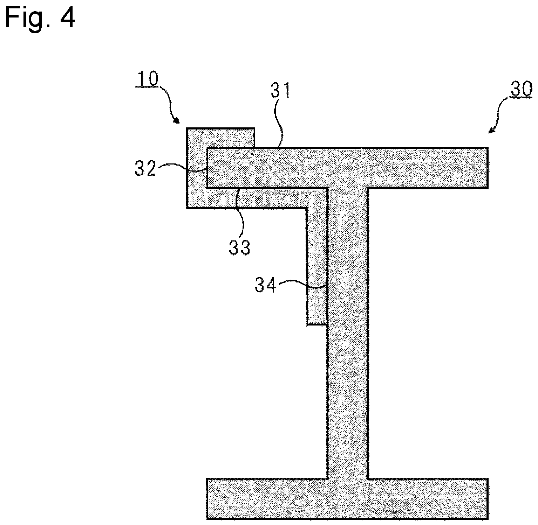

As shown in Fig. 4, the anticorrosive pressure-sensitive adhesive tape 10 of each of Examples and Comparative Examples (100 mm in width and 520 mm in length) was attached to an H-section steel beam 30 in the order of the topside 31 of the upper flange, the edge surface 32, the underside 33 of the upper flange, and the web 34 of the H-section steel beam 30. Five evaluators were instructed to complete the above attachment process within 30 seconds, and the large area applicability of the anticorrosive pressure-sensitive adhesive tape was evaluated based on the following criteria.

A: No wrinkles, lifting, or tears were found in the anticorrosive pressure-sensitive adhesive tapes attached to the H-section steel beams by at least three of the five evaluators.
B: At least one defect among wrinkles, lifting, and tears was found in each of the anticorrosive pressure-sensitive adhesive tapes attached to the H-section steel beams by at least three of the five evaluators.

<Weather resistance (gloss retention)>

The anticorrosive pressure-sensitive adhesive tape of each of Examples and Comparative Examples (25 mm in width and 100 mm in length) was attached, and the specular glossiness is measured with respect to the surface of the tape from the base material side with a gloss meter (product name: "IG-340" manufactured by HORIBA, Ltd.). The specular glossiness was measured using a gloss meter of a geometric condition of 60° in accordance with JIS K5600-4-7. The specular glossiness obtained by the measurement at this time was used as a specular glossiness A. Thereafter, the tape was subjected to an accelerated weather resistance test in accordance with Cycle A in JIS K5600-7-7 for 500 hours. After the accelerated weather resistance test was performed, the specular glossiness of the base material of the tape was measured by the same method as performed before the test. The specular glossiness obtained in the measurement after the test is used as a specular glossiness B.
From the two specular glossinesses obtained as above, the gloss retention of the base material of the tape was calculated. The expression for determining the gloss retention is as follows.

$$\text{Gloss retention (\%)} = (\text{specular glossiness B/specular glossiness A}) \times 100$$

A: The gloss retention is 90% or more.
B: The gloss retention is 80% or more and less than 90%.
C: The gloss retention is less than 80%.

<Practical evaluation on separation>

The anticorrosive pressure-sensitive adhesive tape of each of Examples and Comparative Examples (25 mm in width and 100 mm in length) was attached to an SUS plate (50 mm in width and 125 mm in length) and aged at 23°C for three days to prepare a specimen for separation evaluation. Water was injected for five minutes under conditions of water pressure of 8 MPa, from an injection position diagonally upward of the anticorrosive pressure-sensitive adhesive tape in the specimen for separation evaluation toward the side of a longitudinal end of the anticorrosive pressure-sensitive adhesive tape. As the position from which water was injected (injection position), used was a position at which the angle between the line connecting the injection position to the center of the anticorrosive pressure-sensitive adhesive tape end made an angle of 30° with the SUS plate, the position being immediately above a point 5 cm distant in the horizontal direction from the center of the anticorrosive pressure-sensitive adhesive tape end.
The distance separated of the anticorrosive pressure-sensitive adhesive tape after water injection was measured and evaluated in accordance with the following criteria.

A: The distance separated is 0 mm or more and less than 15 mm.

B: The distance separated is 15 mm or more and less than 25 mm.
C: The distance separated is 25 mm or more.

[Material used]

The following materials were used for each of Examples and Comparative Examples.

<Pressure-sensitive adhesive layer>

2-Ethylhexyl acrylate
n-Butyl acrylate
Acrylic acid
Olefin polymer: product name "L-1253", manufactured by KURARAY CO., LTD., hydrogenated polybutadiene having a (meth)acryloyl group at one end.
Tackifier resin 1: product name "ARKON P140", manufactured by Arakawa Chemical Industries, Ltd., hydrogenated petroleum resin, softening point 140°C
Tackifier resin 2: product name "ARKON P100", manufactured by Arakawa Chemical Industries, Ltd., hydrogenated petroleum resin, softening point 100°C
Fine particle: product name "Cel-star Z-27", manufactured by Tokai Kogyo, K.K., glass balloon
Zinc particle: product name "Zinc powder #40", manufactured by SAKAI CHEMICAL INDUSTRY CO., LTD., average particle size 50 $\mu$m
Carbon nanotube (CNT), product name "JENOTUBE 8A", manufactured by JEIO, average diameter 6 to 9 nm, average length 100 to 200 $\mu$m
Dispersant: product name "S-LEC BX-L", manufactured by SEKISUI CHEMICAL CO., LTD., polyvinyl butyral resin
Crosslinking agent: product name "TEAI-1000," manufactured by NIPPON SODA CO., LTD.
Polymerization initiator: 2,2-dimethoxy-2-phenylacetophenone

<Film>

PET: polyethylene terephthalate film, product name "Lumirror S10," manufactured by TORAY INDUSTRIES, INC.
OPP: oriented polypropylene film, product name "PYLEN P2161," manufactured by TOYOBO CO., LTD.
Acryl: acrylic resin film, product name "ACRYPLEN MBS121E," manufactured by Mitsubishi Chemical Corporation
LL/Ny/LL: multi-layered film having the structure of linear low-density polyethylene/nylon/linear low-density polyethylene: product name "DIAMIRON MF F124," manufactured by Mitsubishi Chemical Corporation
Some of the resin films used had a fluororesin coating film on the surface thereof. The coating film was formed on the side of the base material opposite to the side on which the pressure-sensitive adhesive layer was provided. The presence or absence of the coating film is as shown in the table.

[Examples 1 to 8 and Comparative Examples 1 to 3]

Pressure-sensitive adhesive compositions were prepared according to the formulations described in Table 1. Purge with nitrogen gas was carried on the pressure-sensitive adhesive composition to remove dissolved oxygen. Subsequently, each of the pressure-sensitive adhesive compositions was applied to a film. Then, the lamp intensity of the chemical lamp was adjusted such that the intensity of irradiation with ultraviolet rays was 5 mW/cm$^2$, and an anticorrosive pressure-sensitive adhesive tape was obtained through irradiation with ultraviolet rays for 15 minutes. The components of the pressure-sensitive adhesive compositions and the films to which the pressure-sensitive adhesive compositions were applied are as described above.

Table 1

| Items | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| Pressure-sensitive adhesive formulation (parts by weight) | 2-Ethylhexyl acrylate | 85 | 85 | 85 | 85 | 85 | 85 | 85 | 85 | 85 | 85 | 85 |
| | n-Butyl acrylate | 15 | 15 | 15 | 15 | 15 | 15 | 15 | 15 | 15 | 15 | 15 |
| | Acrylic acid | 5 | 5 | 5 | 5 | 5 | 5 | 5 | 5 | 5 | 5 | 5 |
| | Olefin polymer | 10 | 10 | 10 | 10 | 10 | 10 | 10 | 10 | 10 | 10 | 10 |
| | Tackifier resin 1 | 5 | 5 | 5 | 5 | 5 | 5 | 5 | 5 | 5 | 5 | 5 |
| | Tackifier resin 2 | 5 | 5 | 5 | 5 | 5 | 5 | 5 | 5 | 5 | 5 | 5 |
| | Fine particle | 0.8 | 0.8 | 0.8 | 0.8 | 0.8 | 0.8 | 0.8 | 0.8 | 0.8 | 0,8 | 0.8 |
| | Zinc particle | 15 | 15 | 15 | 15 | 15 | 0 | 0 | 15 | 15 | 15 | 15 |
| | Electroconductive material CNT | 0.025 | 0.025 | 0.025 | 0.025 | 0.025 | 0 | 0 | 0.025 | 0.025 | 0.025 | 0.025 |
| | Dispersant | 0.025 | 0.025 | 0.025 | 0.025 | 0.025 | 0 | 0 | 0.025 | 0.025 | 0.025 | 0.025 |
| | Crosslinking agent | 1 | 1 | 1 | 1 | 1 | 1 | 1 | 1 | 1 | 1 | 1 |
| | Polymerization initiator | 0.2 | 0.2 | 0.2 | 0.2 | 0.2 | 0.2 | 0,2 | 0.2 | 0.2 | 0.2 | 0.2 |
| Base material | Type of film | PET | OPP | Acryl | PET | PET | PET | PET | PET | Acryl | LL/Ny/LL | PET |
| | Name of film | Lumirror S10 | PYLEN P2161 | MBS121E | Lumirror S10 | Lumirror S10 | Lumirror S10 | Lumirror S10 | Lumirror S10 | MBS121E | F124 | Lumirror S10 |
| | Presence or absence of coating film | Present | Present | Present | Present | Present | Present | Present | Absent | Absent | Present | Present |

| Items | | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|---|
| Parameter | Film | Thickness | μm | 90 | 90 | 115 | 140 | 90 | 90 | 90 | 50 | 75 | 120 | 190 |
| | | Difference between tensile loads 0.5% to 2.5% | N/mm | 3.7 | 3.0 | 4.0 | 5.8 | 3.7 | 3.7 | 3.7 | 3.1 | 2.6 | 0.9 | 7.5 |
| | | Tear strength | N | 16 (Without fracture) | 16 (Without fracture) | 16 (Without fracture) | 16 (Without fracture) | 16 (Without fracture) | 16 (Without fracture) | 16 (Without fracture) | 16 (Without fracture) | 0.48 | 16 (Without fracture) | 16 (Without fracture) |
| | Pressure-sensitive adhesive layer | Thickness | μm | 600 | 600 | 600 | 600 | 150 | 600 | 150 | 600 | 600 | 600 | 600 |
| | | Storage modulus at 23°C | Pa | 600000 | 600000 | 600000 | 300000 | 300000 | 600000 | 300000 | 600000 | 600000 | 600000 | 600000 |
| | | Presence or absence of formation of rust | After test | Absent | Absent | Absent | Absent | Absent | Absent | Absent | Absent | Absent | Absent | Absent |
| | | Adhesive force to stainless plate (N/25 mm) | Initial | 50 | 50 | 50 | 22 | 22 | 65 | 35 | 50 | 50 | 50 | 50 |
| | | | After test | 48 | 48 | 48 | 22 | 22 | 55 | 25 | 48 | 48 | 48 | 48 |

(continued)

| Items | | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|---|
| | Projection conformability | Height of lifting portion (h) | mm | 0 | 0 | 0 | 0 | 0 | 0 | 0 | 0 | 2 | 0 | 1 |
| | | Tear | Present/absent | Absent | Absent | Absent | Absent | Absent | Absent | Absent | Absent | Present | Present | Absent |
| | | Evaluation | - | A | A | A | A | A | A | A | A | C | A | B |
| | Large area applicability | Presence or absence of occurrence of wrinkles | Present/absent | Absent | Absent | Absent | Absent | Absent | Absent | Absent | Absent | Absent | Present | Absent |
| | | Presence or absence of occurrence of lifting/tear | Present/absent | Absent | Absent | Absent | Absent | Absent | Absent | Absent | Absent | Present | Absent | Present |
| | | Evaluation | - | A | A | A | A | A | A | A | A | B | B | B |
| Practical evaluation | Weather resistance | Gloss retention | % | 92 | 92 | 92 | 92 | 92 | 92 | 92 | 70 | 90 | 92 | 92 |
| | | Evaluation | - | A | A | A | A | A | A | A | C | A | A | A |
| | Separation | Distance separated | mm | 0 | 0 | 0 | 0 | 18 | 0 | 15 | 0 | 0 | 0 | 0 |
| | | Evaluation | - | A | A | A | A | B | A | B | A | A | A | A |

As is clear from Examples described above, the anticorrosive pressure-sensitive adhesive tapes produced in Examples 1 to 8, which satisfied the requirements of the present invention, were excellent in adhesion to an adherend having a complex surface shape, and could suppress occurrences of wrinkles, lifting, and a tear during application to a large area.

In contrast, the anticorrosive pressure-sensitive adhesive tape produced in Comparative Example 1 had poor adhesion to an adherend having a complex surface shape because the tear strength of the base material was less than 1.7 N, resulting in occurrence of lifting and a tear during application to a large area. In addition, since the base material had no coating film, the gloss retention slightly decreased.

In the anticorrosive pressure-sensitive adhesive tape produced in Comparative Example 2, wrinkles occurred during application to a large area because the difference between tensile loads of the base material was less than 1.5 N/mm.

In the anticorrosive pressure-sensitive adhesive tape produced in Comparative Example 3, lifting occurred during application to a large area because the difference between tensile loads of the base material was larger than 6.0 N/mm.

Reference Signs List

10 anticorrosive pressure-sensitive adhesive tape
11 pressure-sensitive adhesive layer
12 base material
13 metal layer
20 L-shaped SUS plate
20A face to be adhered
30 H-section steel beam
h height
t width

**Claims**

1. An anticorrosive pressure-sensitive adhesive tape comprising a base material and a pressure-sensitive adhesive layer provided on at least one side of the base material, the base material having a difference between a tensile load at 2.5% elongation and a tensile load at 0.5% elongation of 1.5 N/mm or more and 6.0 N/mm or less, and having a tear strength of 1.7 N or more as measured by an Elmendorff tear method in accordance with JIS K7128-2 (1998) without forming a slit.

2. The anticorrosive pressure-sensitive adhesive tape according to claim 1, wherein the anticorrosive pressure-sensitive adhesive tape suffers no formation of rust in a cyclic corrosion test in accordance with Cycle D in JIS K5600-7-9, and has an adhesive force after the cyclic corrosion test of 20 N/25 mm or more.

3. The anticorrosive pressure-sensitive adhesive tape according to claim 1 or 2, wherein the base material has a gloss retention of 80% or more after an accelerated weather resistance test in accordance with Cycle A in JIS K5600-7-7 is conducted for 500 hours.

4. The anticorrosive pressure-sensitive adhesive tape according to any one of claims 1 to 3, wherein the base material has a thickness of 20 to 150 $\mu$m.

5. The anticorrosive pressure-sensitive adhesive tape according to any one of claims 1 to 4, wherein the base material is a resin film having a coating film on a surface thereof.

6. The anticorrosive pressure-sensitive adhesive tape according to claim 5, wherein the resin film is at least one resin film selected from the group consisting of a polyethylene telephthalate (PET) film, an oriented polypropylene (OPP) film, an acrylic resin film, and a polyamide resin film.

7. The anticorrosive pressure-sensitive adhesive tape according to any one of claims 1 to 6, wherein the pressure-sensitive adhesive layer contains a metal having a lower potential than that of iron.

8. The anticorrosive pressure-sensitive adhesive tape according to claim 7, wherein the metal having a lower potential than that of iron is zinc.

9. The anticorrosive pressure-sensitive adhesive tape according to claim 7 or 8, wherein the pressure-sensitive adhesive layer contains an electroconductive material other than the metal having a lower potential than that of iron.

10. The anticorrosive pressure-sensitive adhesive tape according to claim 9, wherein the electroconductive material is a carbon nanotube.

11. The anticorrosive pressure-sensitive adhesive tape according to any one of claims 1 to 10, wherein the pressure-sensitive adhesive layer is formed of a pressure-sensitive acrylic adhesive.

12. The anticorrosive pressure-sensitive adhesive tape according to any one of claims 1 to 11, comprising a metal layer between the base material and the pressure-sensitive adhesive layer, the metal layer being a layer of a metal having a lower potential than that of iron.

13. The anticorrosive pressure-sensitive adhesive tape according to claim 12, wherein the metal layer is a layer of zinc.

14. The anticorrosive pressure-sensitive adhesive tape according to any one of claims 1 to 13, wherein the pressure-sensitive adhesive layer has a thickness of 50 to 3000 $\mu$m.

15. The anticorrosive pressure-sensitive adhesive tape according to any one of claims 1 to 14, wherein the pressure-sensitive adhesive layer has a storage elastic modulus at 23°C of 50,000 to 1,000,000 Pa.

16. The anticorrosive pressure-sensitive adhesive tape according to any one of claims 1 to 15, wherein the pressure-sensitive adhesive layer is provided on one side of the base material, and
the anticorrosive pressure-sensitive adhesive tape further comprises a surface protection film provided on a surface on a side of the base material opposite to the pressure-sensitive adhesive layer side for protecting the surface on the side of the base material opposite to the pressure-sensitive adhesive layer side.

17. A structure comprising: the anticorrosive pressure-sensitive adhesive tape according to any one of claims 1 to 16; and an adherend formed of a metal material or an adherend formed of concrete, wherein the anticorrosive pressure-sensitive adhesive sheet is attached to a surface of the adherend.

18. The structure according to claim 17, wherein an attachment area of the anticorrosive pressure-sensitive adhesive tape is 2000 cm$^2$ or more.

19. A corrosion prevention method comprising: a first process of providing the anticorrosive pressure-sensitive adhesive tape according to claim 16; and a second process of attaching the anticorrosive pressure-sensitive adhesive tape to an adherend and then peeling the surface protection film from the anticorrosive pressure-sensitive adhesive tape.

## Fig. 1

## Fig. 2

## Fig. 3

Fig. 4

## INTERNATIONAL SEARCH REPORT

| International application No. |
| --- |
| **PCT/JP2023/033255** |

| A. | CLASSIFICATION OF SUBJECT MATTER |
| --- | --- |

*C09J 7/29*(2018.01)i; *C09J 7/38*(2018.01)i; *C09J 11/04*(2006.01)i; *C09J 133/04*(2006.01)i; *C09J 201/00*(2006.01)i; *C23F 11/00*(2006.01)i; *C23F 13/02*(2006.01)i; *C23F 13/10*(2006.01)i; *C23F 13/18*(2006.01)i
FI: C09J7/29; C09J7/38; C09J201/00; C09J133/04; C09J11/04; C23F13/02 A; C23F13/18; C23F13/10 A; C23F11/00 G

According to International Patent Classification (IPC) or to both national classification and IPC

| B. | FIELDS SEARCHED |
| --- | --- |

Minimum documentation searched (classification system followed by classification symbols)

C09J1/00-201/10; C23F11/00; C23F13/02; C23F13/10; C23F13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-1281 A (SEKISUI CHEMICAL CO., LTD.) 07 January 2021 (2021-01-07) claims 1, 3-6, paragraphs [0015], [0017], [0018], [0044], [0050], [0054], table 1, examples 1, 4-10 | 1-2, 4, 7-11, 14-15, 17-18 |
| Y | | 1-19 |
| Y | JP 2009-208392 A (LINTEC CORP.) 17 September 2009 (2009-09-17) paragraph [0024], table 1, comparative example 1 | 1-19 |
| Y | JP 2020-179569 A (DENKA CO., LTD.) 05 November 2020 (2020-11-05) claims 1, 8, paragraph [0125], table 4 | 3-19 |
| Y | JP 2005-112913 A (TOYO INK MANUFACTURING CO., LTD.) 28 April 2005 (2005-04-28) claims 1, 5, paragraph [0038], table 4, examples 1-14 | 3-19 |
| Y | JP 2022-118447 A (SEKISUI CHEMICAL CO., LTD.) 15 August 2022 (2022-08-15) claims 1, 8, paragraphs [0051], [0057], table 2, fig. 2 | 12-19 |

✓ Further documents are listed in the continuation of Box C.　　✓ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 November 2023** | **28 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2023/033255**

### C. DOCUMENTS CONSIDERED TO BE RELEVANT

| Category* | Citation of document, with indication, where appropriate, of the relevant passages | Relevant to claim No. |
|---|---|---|
| Y | JP 2014-169351 A (NITTO DENKO CORP.) 18 September 2014 (2014-09-18) claim 1, paragraph [0019] | 16-19 |
| A | JP 2021-1282 A (SEKISUI CHEMICAL CO., LTD.) 07 January 2021 (2021-01-07) claim 1, table 1, example 2 | 1-19 |
| A | JP 2019-137831 A (NITTO DENKO CORP.) 22 August 2019 (2019-08-22) paragraph [0119] | 1-19 |

Form PCT/ISA/210 (second sheet) (January 2015)

**INTERNATIONAL SEARCH REPORT**
Information on patent family members

International application No.

**PCT/JP2023/033255**

| Patent document cited in search report | | | Publication date (day/month/year) | Patent family member(s) | | | Publication date (day/month/year) |
|---|---|---|---|---|---|---|---|
| JP | 2021-1281 | A | 07 January 2021 | (Family: none) | | | |
| JP | 2009-208392 | A | 17 September 2009 | (Family: none) | | | |
| JP | 2020-179569 | A | 05 November 2020 | (Family: none) | | | |
| JP | 2005-112913 | A | 28 April 2005 | (Family: none) | | | |
| JP | 2022-118447 | A | 15 August 2022 | (Family: none) | | | |
| JP | 2014-169351 | A | 18 September 2014 | (Family: none) | | | |
| JP | 2021-1282 | A | 07 January 2021 | (Family: none) | | | |
| JP | 2019-137831 | A | 22 August 2019 | WO | 2019/155939 | A1 | |
| | | | | TW | 201936840 | A | |
| | | | | CN | 111699232 | A | |
| | | | | KR | 10-2020-0119802 | A | |

Form PCT/ISA/210 (patent family annex) (January 2015)

**REFERENCES CITED IN THE DESCRIPTION**

**Patent documents cited in the description**

*   JP 2019127606 A